# EUROPÄISCHE PATENTSCHRIFT

(11) **EP 3 798 028 B1**
(45) Veröffentlichungstag und Bekanntmachung des Hinweises auf die Patenterteilung: **11.10.2023**
(21) Anmeldenummer: 20191036.1
(22) Anmeldetag: 14.08.2020
(51) Int. Cl.: B60G 17/016, B60G 17/0195, A01D 75/28, B62D 6/00

(54) **LANDWIRTSCHAFTLICHE ARBEITSMASCHINE UND VERFAHREN ZUM LENKEN EINER LANDWIRTSCHAFTLICHEN ARBEITSMASCHINE**
AGRICULTURAL MACHINE AND METHOD FOR STEERING AN AGRICULTURAL MACHINE
MACHINE AGRICOLE ET PROCÉDÉ POUR DIRIGER UNE MACHINE AGRICOLE

(30) Priorität: 30.09.2019 DE 102019126274
(43) Veröffentlichungstag der Anmeldung: 31.03.2021
(73) Patentinhaber: CLAAS Tractor S.A.S., 78141 Vélizy-Villacoublay Cedex (FR)
(72) Erfinder: Villette, Clement, 92190 Meudon (FR)
(74) Vertreter: CLAAS Gruppe

(56) Entgegenhaltungen:
- EP-A1- 2 389 798
- EP-A1- 3 339 137
- EP-A1- 3 718 861
- EP-A2- 2 042 407
- EP-A2- 2 886 419
- DE-A1-102017 221 375
- US-A- 5 322 310

## Beschreibung

### Einleitung

Die Erfindung betrifft eine landwirtschaftliche Arbeitsmaschine entsprechend dem Oberbegriff des Anspruchs 1.

Darüber hinaus betrifft die Erfindung ein Verfahren zum Lenken einer landwirtschaftlichen Arbeitsmaschine entsprechend dem Oberbegriff des Anspruchs 10.

### Stand der Technik

Aus der EP 2 042 407 A ist ein landwirtschaftliches Fahrzeug bekannt, dessen Lenksystem dafür sorgt, dass der maximale Lenkeinschlag bzw. maximale Lenkwinkel nur so eingestellt werden kann, dass in keiner möglichen Position von Fahrzeugachse zu Fahrzeugrahmen ein Kontakt zwischen dem Fahrzeugrumpf (Rahmen, Haube, etc.) und einem Rad eintritt, um Beschädigungen von Komponenten des Fahrzeugs zu vermeiden. Dabei wird die Position der Fahrzeugachse relativ zum Fahrzeugrahmen (Schwenkwinkel bzw. Pendelwinkel bzw. Federweg) über geeignete Mittel, insbesondere Sensoren, fortlaufend online bestimmt. In Abhängigkeit von den bestimmten bzw. gemessenen Werten bezüglich der Position der Fahrzeugachse relativ zum Fahrzeugrahmen, wird der maximal erlaubte Lenkeinschlag ermittelt. Gegebenenfalls wird der aktuell gemessene Lenkwinkel durch einen Eingriff des Lenksystems aktiv korrigiert, sollte der maximal erlaubte Lenkeinschlag überschritten sein. Die Korrektur erfolgt dabei durch Überlagerung der durch die Bedienperson des Fahrzeugs vorgegebenen Stellgröße (Wunsch-Lenkwinkel), mit der durch einen Aktuator initiierten Stellgröße, d.h. durch aktives Rücklenken.

Die EP 2 886 419 A offenbart die Merkmale der Oberbegriffe der Ansprüche 1 und 10. Sie beschreibt ein System und ein Verfahren zur aktiven Festlegung eines End-Lenkwinkels eines landwirtschaftlichen Fahrzeugs. Auch hierbei wird ein maximal zulässiger Lenkwinkel der Räder festgelegt und zwar in Abhängigkeit von der Auslenkung der Radaufhängung, sodass stets ein minimaler Freiraum zwischen den Rädern und anderen Fahrzeugteilen sichergestellt und damit eine Kollision vermieden wird.

Schließlich ist in der EP 3 339 137 A noch ein Lenkunterstützungssytem für ein landwirtschaftliches Fahrzeug beschrieben, bei dem mittels eines Pendelwinkelsensors eine Auslenkung einer mit lenkbaren Rädern versehenen Starrachse gegenüber der tragenden Fahrzeugstruktur ermittelt wird. Außerdem ist eine Stellanordnung zur Beeinflussung des Lenkeinschlagwinkels vorhanden, die wiederum von einer Kontrolleinheit ansteuerbar ist. Diese Kontrolleinheit berechnet nach Maßgabe des ermittelten Pendelwinkels unter Berücksichtigung baulicher Beschränkungen einen für den Lenkeinschlagwinkel zulässigen Schwellenwert. Sollte es zu einer Überschreitung des Schwellenwerts bzw. eines vorgegebenen Toleranzbereichs darum durch den ermittelten Lenkeinschlagwinkel kommen, so wird die Stellanordnung in der Weise angesteuert, dass Lenkeingriffe im Sinne einer Verringerung des Lenkeinschlagwinkels vorgenommen werden, um den zulässigen Schwellenwert einzuhalten und dadurch wiederum Kollisionen zu vermeiden.

Aus der nachveröffentlichten Patentschrift EP 3 718 861 B1 ist ebenfalls eine landwirtschaftliche Arbeitsmaschine, sowie ein Verfahren zum Lenken einer landwirtschaftlichen Arbeitsmaschine vorbekannt.

Nachteilig bei den bekannten Lenkwinkel-Begrenzungssystemen ist es, dass ein Befahren vorgegebener (stärker gekrümmter) Spuren beispielsweise in einem Vorgewende oder bei einem Rangieren in Stallungen deutlich erschwert wird und ein zusätzlicher Rangieraufwand erforderlich ist, um die gewünschten Fahraktionen ausführen zu können.

### Aufgabe

Der Erfindung liegt die Aufgabe zugrunde, eine landwirtschaftliche Arbeitsmaschine, insbesondere einen Traktor, sowie ein Verfahren zum Lenken einer landwirtschaftlichen Arbeitsmaschine, insbesondere eines Traktors, bereitzustellen, bei dem die vorgenannten Nachteile vermieden werden und bei dem unter sicherer Vermeidung einer Kollision eines Rades mit Maschinenteilen eine bestmögliche Manövrierfähigkeit im Sinne möglichst großer Lenkwinkel ermöglicht wird.

### Lösung

Ausgehend von einer Arbeitsmaschine der eingangs beschriebenen Art wird die Aufgabe erfindungsgemäß dadurch gelöst, dass mittels des Steuersystems in Abhängigkeit eines vorgebbaren maximalen Lenkwinkels des mindestens einen lenkbaren Rades ein Schwenkwinkel, um den die Pendelachse relativ zu dem Fahrzeugrahmen um die Schwenkachse verschwenkbar ist, begrenzbar ist.

Bei einem Fahrzeugrahmen im Sinne der vorliegenden Anmeldung muss es sich nicht zwingend um eine rahmenartige, insbesondere nicht um eine leiterrahmen-artige Struktur handeln. Vielmehr fällt auch jede andere denkbare "Tragstruktur" der Arbeitsmaschine, an der die Räder irgendwie aufgehängt sind, unter diesen Begriff, wie beispielsweise gusseiserne Körper, Schweißkonstruktionen oder aus Blechformteilen zusammengesetzte, insbesondere geschweißte Konstruktionen.

Unter einer Pendelachse im Sinne der vorliegenden Erfindung sind sowohl jeweils die Radachsen einer Starrachse zu verstehen, bei der die beiden Radachsen ihre relative Ausrichtung zueinander nicht ändern und insbesondere miteinander übereinstimmen, d.h. zusammenfallen. Es sollen unter dem Begriff "Pendelachse" aber auch unterschiedlichste Arten von Einzelradaufhängungen verstanden werden, bei denen einzelne Räder mit separaten Aufhängungen an einem Achskörper gekoppelt sind und somit sich unabhängig voneinander bewegen können. Jedes einzelne Rad mit seiner Pendelachse (= Radachse) "pendelt" in diesem Fall um seine eigene "Schwenkachse", wobei unter einer Pendelbewegung nicht zwingend eine reine Drehbewegung um die "Schwenkachse" verstanden werden soll, sondern auch eine kombinierte translatorische Bewegung in zwei Achsrichtungen, wie sie beispielsweise bei einer Achsaufhängung nach Art eines Doppelquerlenkers auftritt. Jedenfalls ist unter "Pendelachse" eine geometrische Achse (nämlich eine sich "pendelnd" bewegende Radachse) und nicht (zwingend) ein körperliches Bauteil zu verstehen.

Das Grundprinzip der vorliegenden Erfindung beruht darauf, dass ein maximal erreichbarer Lenkwinkel - insbesondere in Abhängigkeit von dem jeweiligen Betriebsmodus - vorgegeben wird und dass in Abhängigkeit davon der maximal zulässige Schwenkwinkel, um den die Pendelachse um die Schwenkachse relativ zu dem Fahrzeugrahmen verschwenkbar ist, so begrenzt wird, dass gerade keine Kollision des lenkbaren Rades mit anderen Maschinenteilen eintritt. Die Erfindung zeichnet sich somit durch ein genau entgegengesetztes Vorgehen aus, als dies im Stand der Technik realisiert wird. Die bekannten Systeme zur Verbesserung des Lenkverhaltens erlauben beliebige Schwenkwinkel der Pendelachse, ohne hierauf irgendeinen Einfluss zu nehmen. Die bekannte Vorgehensweise beginnt somit stets mit einem bloßen Erfassen des Schwenkwinkels, also des Einfederzustands des lenkbaren Rades, mittels geeigneter Sensorik, um sodann festzulegen, welcher maximale Lenkwinkel in Abhängigkeit des Einfederungszustandes bzw. Auslenkungszustandes der Pendelachse gerade noch erlaubt ist. Bei Überschreitung des maximal zulässigen Lenkwinkels werden Eingriffe in das Lenksystem vorgenommen, um erforderlichenfalls den Lenkwinkel aktiv, d.h. gegen die Sollwertvorgabe des Fahrzeugführers, zurückzunehmen.

Genau anders herum geht die vorliegende Erfindung vor, indem sie sich an den Bedürfnissen des jeweiligen Betriebsmodus des Fahrzeugs orientiert. Soll beispielsweise im Frontladerbetrieb in einer Scheune mit großem Lenkwinkel rationell und zeitsparend rangiert werden, oder sollen in einem Vorgewende Spuren mit kleinen Radien nachgefahren werden können, so wird ein entsprechend großer maximaler Lenkwinkel festgelegt und eingestellt. Hieraus berechnet sich in einem zweiten Schritt der maximal zulässige Schwenkwinkel der Pendelachse bzw. das maximale Einfederungsverhalten der mit dem mindestens einen lenkbaren Rad versehenen Pendelachse. Nach Berechnung bzw. Festlegung des maximalen Schwenkwinkels ist sodann mit Hilfe geeigneter Mittel, insbesondere Aktoren, die ebenfalls von dem Steuersystem angesteuert werden, dafür zu sorgen, dass der zulässige Schwenkwinkel auch eingehalten wird.

Vorzugsweise ist die Verschwenkung der Pendelachse mittels mindestens einer Stelleinrichtung begrenzbar, vorzugsweise mittels einer kombinierten Begrenzung der Wege zweier Achsteile mit jeweils einer Pendelachse, wobei die Achsteile vorzugsweise jeweils auf gegenüberliegenden Seiten der Schwenkachse angeordnet sind. So bewegt sich zum Beispiel bei einer pendelnd gelagerten Starrachse ein lenkbares Rad nach oben, während das andere sich entsprechend nach unten bewegt. Die Stelleinrichtung kann in diesem Fall erfindungsgemäß auf der einen Seite die Aufwärtsbewegung des lenkbaren Rades begrenzen und über einen bestimmten Schwenkwinkel hinaus unterbinden und auf der gegenüber liegenden Seite der Schwenkachse entsprechend eine Abwärtsbewegung des anderen lenkbaren Rades begrenzen bzw. unterbinden. Im Falle einer Einzelradaufhängung sind die Schwenkwinkel der beiden Pendelachsen (d.h. Radachsen) unabhängig voneinander zu begrenzen, wobei typischerweise nur die jeweiligen Aufwärtsbewegungen der lenkbaren Räder gegenüber dem Fahrzeugrahmen problematisch sind und begrenzt werden müssen, wohingegen bei einer Abwärtsbewegung ("Ausfedern") eine Begrenzung nicht erforderlich ist, da in diesem Fall auch bei größtem möglichen Lenkwinkel typischerweise keine Kollision mit einem Maschinenteil eintritt.

Typischerweise kann die Stelleinrichtung einen verstellbaren mechanischen Anschlag und/oder einen Hydraulik- und/oder Pneumatikzylinder umfassen. Der verstellbare mechanische Anschlag kann sich dann so einstellen lassen, dass ein maximal zulässiger Schwenkwinkel der Pendelachse möglich ist. Wird eine Pendelachse von einem Hydraulik- und/oder Pneumatikzylinder geführt, so lässt sich der maximal zulässige Kolbenweg bestimmen und begrenzen. Insbesondere bei einem hydraulischen System der Rad- bzw. Achsaufhängung lässt sich durch ein entsprechendes Steuersystem mit Ventilen und/oder Drosseln die Steifigkeit des Zylinders verändern und insbesondere mittels einer quasiunendlichen Steifigkeit eine Art "Anschlag" bei einem gewissen Kolbenweg realisieren.

Bei einer bevorzugten Ausführungsform der Erfindung verläuft die Schwenkachse zumindest im Wesentlichen horizontal sowie in Längsrichtung der Arbeitsmaschine. Dies trifft beispielsweise zu, wenn die Pendelachse einen Pendelachskörper aufweist, der vorzugsweise um die Schwenkachse relativ zu dem Fahrzeugrahmen verschwenkbar oder an einem relativ zu dem Fahrzeugrahmen verschwenkbaren Achsträger gelagert ist.

Die Erfindung weiter ausgestaltend ist vorgesehen, dass der Pendelachskörper T-förmig ausgebildet ist und vorzugsweise an einem Lagerende an dem Fahrzeugrahmen gelagert ist. Darüber hinaus ist der Pendelachskörper mit einander gegenüber liegend angeordneten Radarmen versehen, deren freie Enden jeweils ein lenkbares Rad aufweisen. Dies stellt eine besonders robuste und einfach herzustellende Art der Radaufhängung dar und erlaubt zugleich große Schwenkwinkel und dadurch eine hervorragende Geländegängigkeit der landwirtschaftlichen Arbeitsmaschine.

Eine Weiterbildung der erfindungsgemäßen Arbeitsmaschine besteht darin, dass die Radarme des Pendelachskörpers jeweils mittels einer Stelleinrichtung an dem Fahrzeugrahmen aufgehängt sind. Bei einer derartigen Stelleinrichtung kann es sich z.B. um einen Hydraulik- oder Pneumatikzylinder handeln, aber auch um verstellbare mechanische Anschläge, insbesondere solche mit z.B. gummielastischen Puffern für einen gedämpften materialschonenden Anschlag.

Erfindungsgemäß wird der maximal mögliche Lenkwinkel in Abhängigkeit eines wählbaren Arbeitsmodus, insbesondere eines Ackerbetriebs und/oder Frontladerbetriebs und/oder anderer Modi, vorgegeben. In einem zweiten Schritt wird dann der maximal erlaubte Schwenkwinkel der Pendelachse ermittelt und festgelegt.

Eine Weiterbildung der Erfindung besteht außerdem darin, dass eine Position der mindestens einen relativ zu dem Fahrzeugrahmen verschwenkbaren Pendelachse relativ zu dem Fahrzeugrahmen mittels mindestens eines Winkelsensors, mit dem eine Schwenkstellung eines relativ zu dem Fahrzeugrahmen schwenkbaren Achsteils der Pendelachse, insbesondere eines Radarms eines Pendelachskörpers, ermittelbar ist, und/oder mittels mindestens eines Wegsensors, mittels dessen ein Abstand zwischen einem Achsteil der Pendelachse, insbesondere eines Radarms eines Pendelachskörpers und dem Fahrzeugrahmen, oder ein Stellweg einer zwischen einem Achsteil der Pendelachse und dem Fahrzeugrahmen angeordneten Stelleinrichtung ermittelbar ist.

Ausgehend von einem Verfahren der weiter oben beschriebenen Art wird die zugrunde liegende Aufgabe erfindungsgemäß dadurch gelöst, dass als erster Verfahrensschritt ein maximal möglicher Lenkwinkel vorgegeben wird und in einem zweiten Schritt in Abhängigkeit von dem vorgegebenen Lenkwinkel von dem Steuersystem eine Bewegung der Pendelachse begrenzt wird, so dass keine Kollision eines lenkbaren Rades mit anderen Maschinenteilen eintritt. Im Hinblick auf die mit dem erfindungsgemäßen Verfahren erzielbaren Vorteile wird auf die entsprechenden Ausführungen weiter oben verwiesen.

### Ausführungsbeispiel

Die Erfindung ist nachstehend anhand eines Ausführungsbeispiels, das in den Figuren dargestellt ist, näher erläutert. Es zeigt:
- Fig. 1:: Eine Seitenansicht einer landwirtschaftlichen Arbeitsmaschine in Form eines Traktors,
- Fig. 2:: eine Draufsicht auf die Arbeitsmaschine gemäß Figur 1, jedoch in schematisierter Darstellung,
- Fig. 3:: eine Vorderansicht der landwirtschaftlichen Arbeitsmaschine gemäß Figur 1,
- Fig. 4:: einen Ausschnitt einer schematischen Frontansicht mit Verdeutlichung eines Anschlagpunkts zwischen einem Rad und einer Motorhaube im Fall keiner Auslenkung der Pendelachse (Schwenkwinkel = 0 Grad),
- Fig. 5:: wie Figur 4, jedoch im Fall eines von 0 Grad verschiedenen Schwenkwinkels,
- Fig. 6:: eine Vorderansicht einer Vorderachse in schematischer Darstellung mit einem Schwenkwinkel von 0 Grad,
- Fig. 7:: wie Figur 6, jedoch ohne Darstellung der Räder und mit einem Schwenkwinkel ungleich 0 Grad,
- Fig. 8:: eine schematische Darstellung einer Vorderachse, ausgeführt als Pendelachskörper.

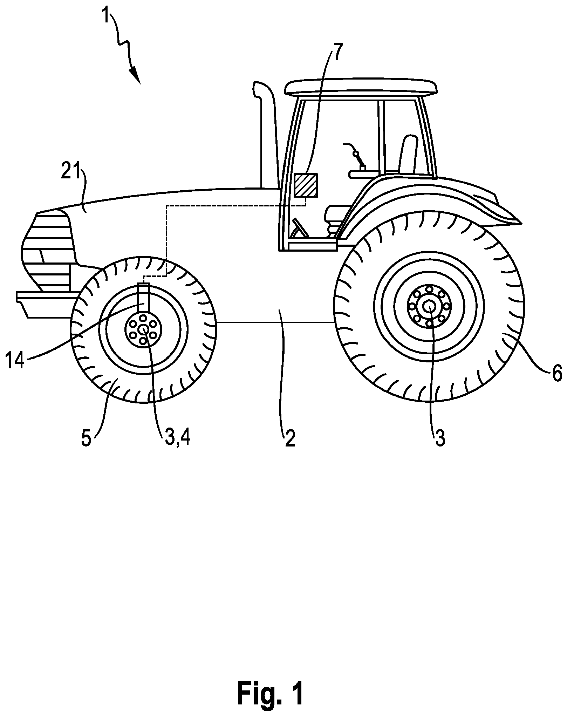

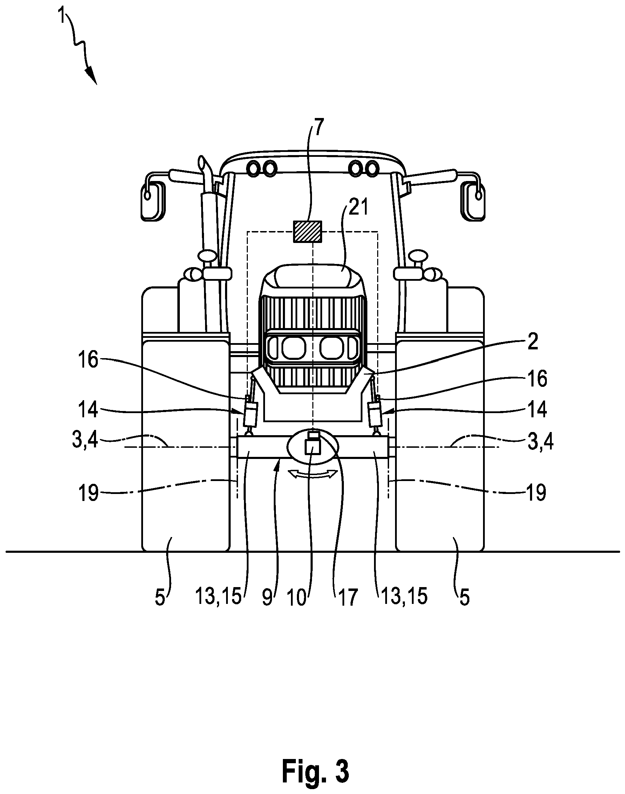

Eine in den Figuren 1 bis 3 in verschiedenen Ansichten dargestellte landwirtschaftliche Arbeitsmaschine 1 in Form eines Traktors weist einen Fahrzeugrahmen 2 sowie vier Räder 5, 6 auf, die jeweils mit dem Fahrzeugrahmen 2 verbunden sind. Zwei der Räder 6 sind Hinterräder, die an einer Starrachse angeordnet sind und für die vorliegende Erfindung nicht weiter von Belang sind. Bei den beiden anderen Rädern 5 handelt es sich um Vorderräder, die lenkbar ausgeführt sind. Sämtliche Räder 5, 6 besitzen jeweils eine Radachse 3, die im Falle der hinteren Räder 6 zusammenfallen und in Bezug auf den Fahrzeugrahmen 2 fix sind, wohingegen die Radachsen 3 der vorderen Räder 5 in mehrfacher Hinsicht lageveränderlich sind und jeweils als Pendelachse 4 ausgeführt sind.

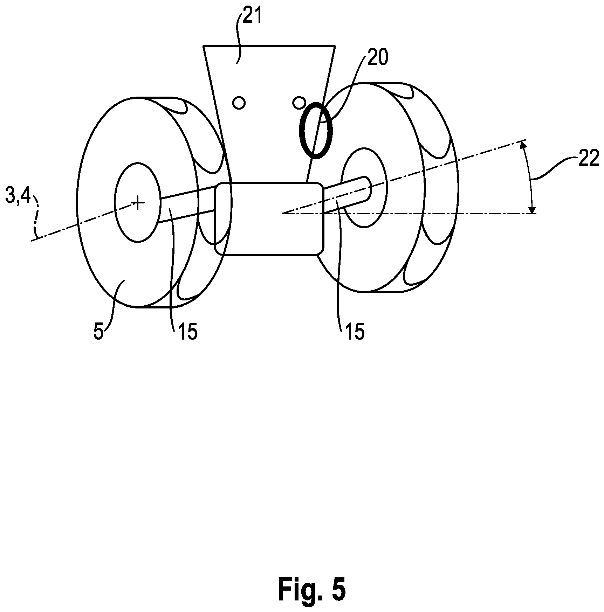

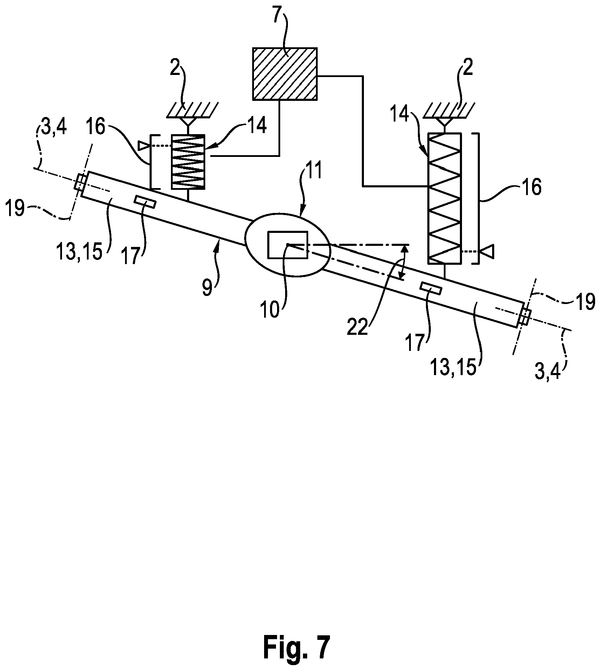

Die Arbeitsmaschine 1 weist darüber hinaus ein rein schematisch dargestelltes Steuersystem 7 auf, das mit zwei Stellzylindern 14 in Form von z.B. Hydraulikzylindern gekoppelt ist. Das Steuersystem 7 umfasst eine Hydraulikeinheit und Ventile sowie Hydraulikleitungen, die mit den Stelleinrichtungen 14 verbunden sind, um die Hydraulikzylinder durch entsprechende Beaufschlagung der Arbeitsräume ein- und ausfahren zu können. Das Steuersystem 7 umfasst darüber hinaus zwei jeweils an einem Stellzylinder 14 angeordnete Wegsensoren, die die Stellung der Kolbenstangen in den Hydraulikzylindern erfassen und den erfassten Wert an das Steuersystem 7 weitergeben können, beispielsweise über jeweils eine elektrische Leitung oder auch drahtlos. Außerdem zählt zu dem Steuersystem 7 auch ein Winkelsensor 17, mit dem ein Schwenkwinkel 22 (s. z.B. in den Figuren 5 und 7) eines Pendelachskörpers 9 erfassbar und auf geeignete Weise (elektrische Leitung oder drahtlos) an das Steuersystem 7 weiterleitbar ist.

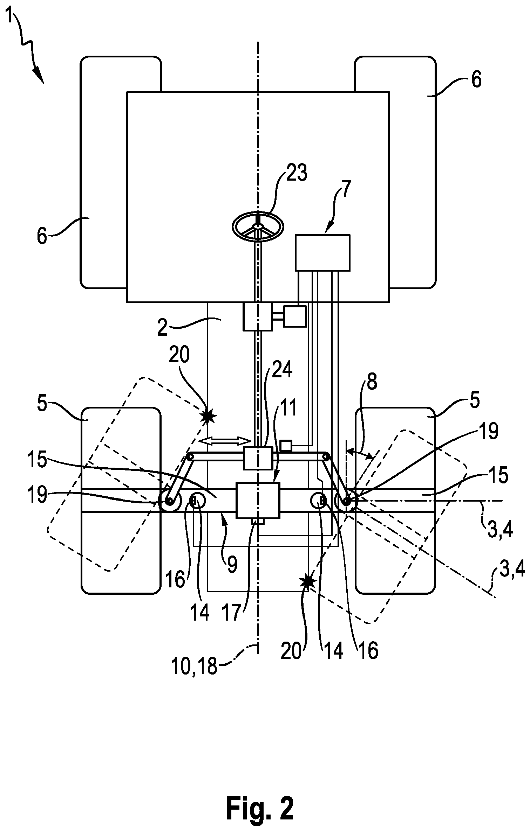

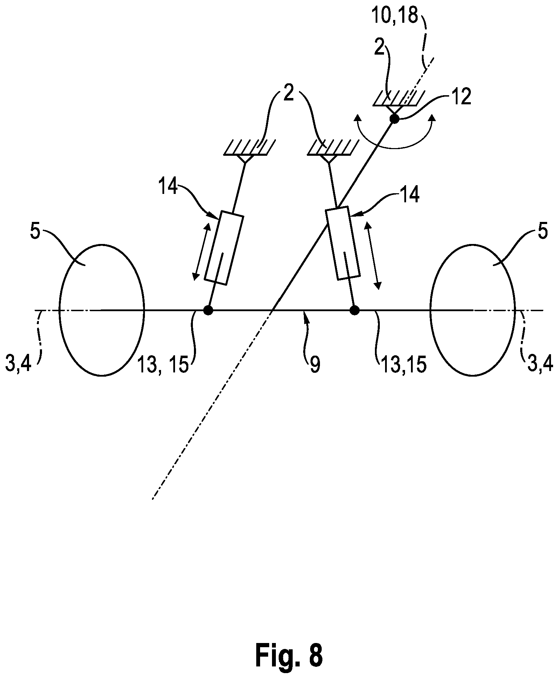

Wie sich insbesondere aus den Figuren 2 und 8 ergibt, ist die Vorderachse der Arbeitsmaschine 1 als so genannter Pendelachskörper 9 ausgebildet, der eine T-Form besitzt, wobei sich an den beiden freien Enden zweier Radarme 13 des T jeweils ein vorderes Rad 5 und an einem den hinteren Rädern 6 zugewandten Lagerende 12 des Pendelachskörpers 9 ein Drehlager befindet, mit dem der Pendelachskörper 9 um eine Schwenkachse 10 herum in dem Fahrzeugrahmen 2 gelagert ist. Die Schwenkachse 10 verläuft dabei in einer Richtung parallel zu einer (ebenen) Aufstandsfläche der Arbeitsmaschine 1 und parallel zu einer Längsrichtung 18 der Arbeitsmaschine 1. Wird der Pendelachskörper 9 um die Schwenkachse 10 verschwenkt, so bewegt sich das an einem Radarm 13 des Pendelachskörpers 9 befindliche Rad 5 aufwärts, wohingegen sich das gegenüberliegende, an dem anderen Radarm 13 befindliche Rad abwärts bewegt. Dementsprechend fährt die Kolbenstange des sich abwärts bewegenden Rades 5 aus, wohingegen die Kolbenstange des sich entgegengesetzt, d.h. aufwärts bewegenden Rades 5 einfährt, um die sich entsprechend ändernden Abstände zwischen den Lagerpunkten der Stelleinrichtungen 14 in Form der Hydraulikzylinder und deren Anlenkungspunkt an die zugeordneten Achsteile 15 entsprechend anzupassen.

Der Figur 2 lässt sich entnehmen, dass sich die vorderen Räder 5 nicht nur entsprechend dem jeweiligen Schenkwinkel 10 mit dem Pendelachskörper 9 auf und abwärts bewegen können, sondern relativ zu dem Pendelachskörper 9 jeweils um eine eigene Lenkachse 19 drehbar gelagert sind. Je nach Vorgabe eines gewünschten Lenkeinschlags durch den Fahrzeugführer an einem Lenkrad 23 wird von einem der Einfachheit halber allgemein als Lenkeinrichtung 24 bezeichneten System, das eine aktive Lenkunterstützung beinhaltet, ein jeweiliger Lenkwinkel 8 an den vorderen Rädern 5 eingestellt.

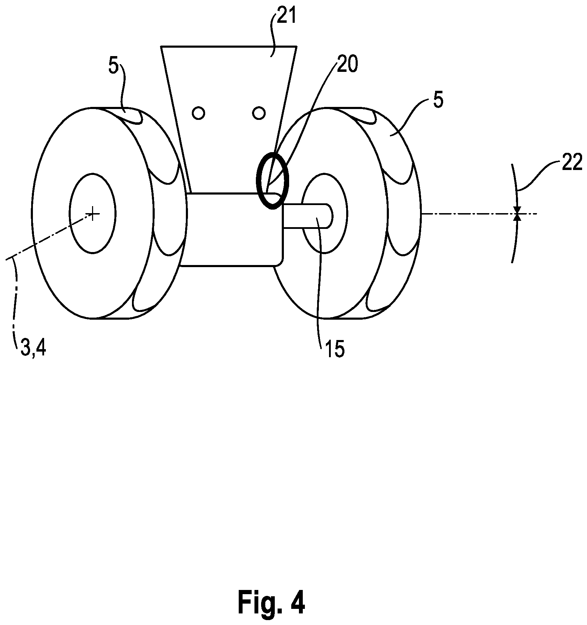

Durch Vergleich der Figuren 4 und 5 lässt sich erkennen, dass bei einem Schwenkwinkel von 0 Grad (Figur 4) ein Anschlagpunkt 20 zwischen einem kurveninneren vorderen Rad 5 und einer mit dem Fahrzeugrahmen 2 verbundenen Motorhaube 21 tiefer gelegen ist als bei einer Situation, in der ein Schwenkwinkel 22 des Pendelachskörpers größer als 0 ist (im vorliegenden, sehr schematisch dargestellten Fall ca. 20°, s. Figur 5). Dieser Effekt tritt unter anderem ein, wenn die Motorhaube 21 im Querschnitt ungefähr trapezförmig ist, d.h. sich nach oben hin verbreitert.

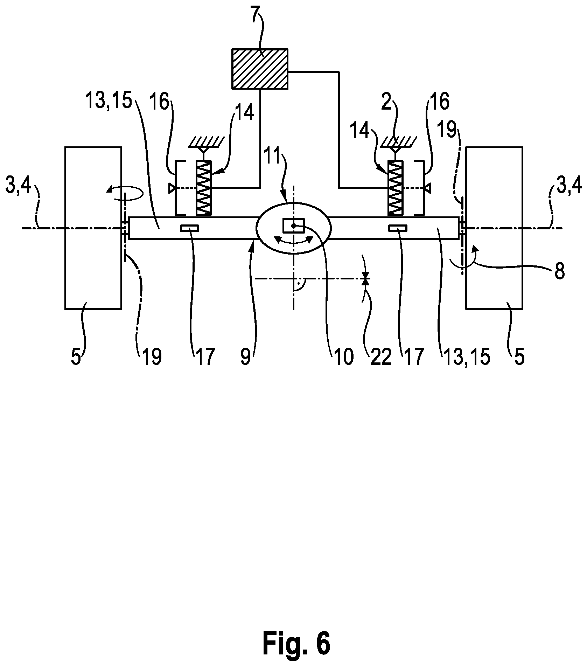

Das von der Erfindung verwirklichte Verfahren läuft wie folgt ab, was sich am anschaulichsten bei Betrachtung der Figuren 6 und 7 nachvollziehen lässt:

Der Fahrzeugführer wählt an einer nicht dargestellten, mit dem Steuersystem verbundenen Bedieneinrichtung der Arbeitsmaschine 1 einen Betriebsmodus aus, beispielsweise "Rangierbetrieb". Da in einem solchen Betriebsmodus ein besonders großer Lenkwinkel 8 vorteilhaft und erwünscht ist, um beispielsweise in engeren Stallungen mit möglichst wenig Rangierbewegungen gewisse Fahraktionen ausführen zu können, wird ein maximal möglicher Lenkwinkel 8, in diesem Fall ausgehend von dem in Figur 4 gezeigten Zustand eines Schwenkwinkels von 0 Grad, festgelegt. Damit bei Realisierung dieses maximal möglichen Lenkwinkels 8 keine Kollision zwischen einem vorderen Rad 5 und einem mit dem Fahrzeugrahmen 2 verbundenen Fahrzeugteil, z.B. der Motorhaube 21, eintreten kann, wird von dem Steuersystem 7 der maximale Schwenkwinkel 22 des Pendelachskörpers 9 festgelegt. Im vorliegenden Extremfall wird der Schwenkwinkel 22 auf 0 Grad festgelegt, so dass das Steuersystem die Stelleinrichtungen 14 in Form der Hydraulikzylinder in einer horizontalen Ausrichtung des Pendelachskörpers 9 fixiert (quasiunendliche Steifigkeit). Pendelachskörper 9 und Fahrzeugrahmen 2 können sich somit in dieser Einstellung überhaupt nicht relativ zueinander bewegen, so dass auch eine Auslenkung der vorderen Räder 5 nach oben oder unten nicht stattfinden kann. Aus diesem Grunde ist es unkritisch, den maximal möglichen Lenkwinkel 8 auch tatsächlich zu realisieren. Bei Rangieraktionen auf ebenen Scheunenböden ist die Versteifung des Fahrwerks der Arbeitsmaschine 1 dergestalt, dass alle vier Räder 5, 6 sich nicht relativ zum Fahrzeugrahmen 2 bewegen können, unkritisch.

Wird hingegen von dem Fahrzeugführer ein anderer Betriebsmodus, wie beispielsweise "Geländefahrbetrieb", eingestellt, so wird von dem Steuersystem 7 der maximal mögliche Lenkwinkel 8 gegenüber dem zuvor beschriebenen Modus "Rangierbetrieb" deutlich reduziert, da die Rangiereigenschaften in dem Fall "Geländefahrbetrieb" nicht vorrangig sind. Hingegen sind Auslenkungen der vorderen Räder 5 in unebenem Gelände, beispielsweise auf Wirtschaftswegen von schlechter Qualität, von großer Bedeutung, so dass in diesem Fall der maximal erlaubte Schwenkwinkel 22 des Pendelachskörpers 9 entsprechend groß gewählt werden kann.

### Bezugszeichenliste

- 1: Arbeitsmaschine
- 2: Fahrzeugrahmen
- 3: Radachse
- 4: Pendelachse
- 5: Rad
- 6: Rad
- 7: Steuersystem
- 8: Lenkwinkel
- 9: Pendelachskörper
- 10: Schwenkachse
- 11: Achsträger
- 12: Lagerende
- 13: Radarm
- 14: Stelleinrichtung
- 15: Achsteil
- 16: Wegsensor
- 17: Winkelsensor
- 18: Längsrichtung
- 19: Lenkachse
- 20: Anschlagpunkt
- 21: Motorhaube
- 22: Schwenkwinkel
- 23: Lenkrad
- 24: Lenkeinrichtung

## Patentansprüche

1. Landwirtschaftliche Arbeitsmaschine (1), insbesondere ein Traktor, umfassend
- einen Fahrzeugrahmen (2),
- mindestens zwei Radachsen (3),
- mindestens drei Räder (5, 6),
- ein Steuersystem (7) sowie
- eine Bedieneinrichtung, die mit dem Steuersystem (7) verbunden ist,
wobei die Radachsen (3, 4) zumindest mittelbar mit dem Fahrzeugrahmen (2) in Kraft übertragender Weise verbunden sind,
wobei mindestens eine Radachse (3) von einer Pendelachse (4) gebildet ist, die relativ zu dem Fahrzeugrahmen (2) um eine Schwenkachse (10) verschwenkbar gelagert ist,
wobei an der Pendelachse (3) mindestens ein Rad (5) von einem lenkbaren Rad (5) gebildet ist, das derart relativ zu der Pendelachse (4) um eine Lenkachse (19) verschwenkbar ist, dass ein auf eine Längsrichtung (18) der Arbeitsmaschine (1) bezogener Lenkwinkel (8) des lenkbaren Rades (5) veränderbar ist,
wobei mittels des Steuersystems (7) das Lenkverhalten der Arbeitsmaschine (1) unter Vermeidung einer Kollision des lenkbaren Rades (5) mit anderen Maschinenteilen steuerbar ist,
**dadurch gekennzeichnet, dass**
mittels des Steuersystems (7) in Abhängigkeit eines vorgegebenen maximalen Lenkwinkels (8) des mindestens einen lenkbaren Rades (5) ein Schwenkwinkel (22), um den die Pendelachse (4) relativ zu dem Fahrzeugrahmen (2) um die Schwenkachse (10) verschwenkbar ist, begrenzt ist, und
der maximal mögliche Lenkwinkel (8) in Abhängigkeit eines an der Bedieneinrichtung gewählten Arbeitsmodus, insbesondere eines Ackerbetriebs und/oder Frontladerbetriebs und/oder Geländefahrbetriebs, vorgegeben ist.

2. Arbeitsmaschine nach Anspruch 1, **dadurch gekennzeichnet, dass** die Verschwenkung der Pendelachse (4) mittels mindestens einer Stelleinrichtung (14) begrenzbar ist, vorzugsweise mittels einer kombinierten Begrenzung der Wege zweier Achsteile (15) mit jeweils einer Pendelachse (4), wobei die Achsteile (15) vorzugsweise auf gegenüberliegenden Seiten der Schwenkachse (10) angeordnet sind.

3. Arbeitsmaschine nach Anspruch 2, **dadurch gekennzeichnet, dass** die Stelleinrichtung (14) einen verstellbaren mechanischen Anschlag und/oder einen Hydraulik- und/oder Pneumatikzylinder umfasst.

4. Arbeitsmaschine nach einem der Ansprüche 1 bis 3, **dadurch gekennzeichnet, dass** die Schwenkachse (10) zumindest im Wesentlichen horizontal sowie in Längsrichtung (18) der Arbeitsmaschine (1) verläuft.

5. Arbeitsmaschine nach einem der Ansprüche 1 bis 4, **dadurch gekennzeichnet, dass** die Pendelachse (4) einen Pendelachskörper (9) aufweist, wobei vorzugsweise der Pendelachskörper (9) um die Schwenkachse (10) relativ zu dem Fahrzeugrahmen (2) verschwenkbar oder an einem relativ zu dem Fahrzeugrahmen (2) schwenkbaren Achsträger gelagert ist.

6. Arbeitsmaschine nach Anspruch 5, **dadurch gekennzeichnet, dass** der Pendelachskörper (9) T-förmig ausgebildet ist, wobei vorzugsweise der Pendelachskörper (9) an einem Lagerende (12) an dem Fahrzeugrahmen (2) gelagert ist.

7. Arbeitsmaschine nach Anspruch 5 oder 6, **gekennzeichnet durch** einander gegenüberliegend an dem Pendelachskörper (9) angeordnete Radarme (13), deren freie Enden jeweils mit einem lenkbaren Rad (5) versehen ist.

8. Arbeitsmaschine nach Anspruch 7, **dadurch gekennzeichnet, dass** die Radarme (13) des Pendelachskörpers (9) jeweils mittels mindestens einer Stelleinrichtung (14) an dem Fahrzeugrahmen (2) aufgehängt sind.

9. Arbeitsmaschine nach einem der Ansprüche 1 bis 8, **dadurch gekennzeichnet, dass** eine Position der mindestens einen relativ zu dem Fahrzeugrahmen (2) verschwenkbaren Pendelachse (4) relativ zu dem Fahrzeugrahmen (2) mittels mindestens eines Winkelsensors (17), mit dem eine Schwenkstellung eines relativ zu dem Fahrzeugrahmen (2) schwenkbaren Achsteils (15) mit der Pendelachse (4), insbesondere eines Radarms (13) eines Pendelachskörpers (9), ermittelbar ist und/oder eines Wegsensors (16), mittels dessen ein Abstand zwischen einem Achsteil der Pendelachse (4), insbesondere eines Radarms (13) eines Pendelachskörpers (9), und dem Fahrzeugrahmen (2) oder ein Stellweg einer zwischen einem Achsteil (15) mit der Pendelachse (4) und dem Fahrzeugrahmen (2) angeordneten Stelleinrichtung (14) ermittelbar ist.

10. Verfahren zum Lenken einer landwirtschaftlichen Arbeitsmaschine (1), insbesondere eines Traktors, die Arbeitsmaschine (1) umfassend
- einem Fahrzeugrahmen (2),
- mindestens zwei Radachsen (3), die mit dem Fahrzeugrahmen (2) in Kraft übertragender Weise gekoppelt sind, wobei mindestens eine Radachse (3) von einer Pendelachse (4) gebildet ist, die relativ zu dem Fahrzeugrahmen (2) um eine Schwenkachse (10) verschwenkbar gelagert ist,
- mindestens drei Räder (5, 6), wobei an der Pendelachse (4) mindestens ein Rad (5) lenkbar gelagert ist, sodass ein Lenkwinkel (8) des lenkbaren Rades (5) bezogen auf eine Längsrichtung (18) der Arbeitsmaschine (1) veränderbar ist,
- ein Steuersystem (7) zur Verbesserung des Lenkverhaltens der Arbeitsmaschine (1) unter Vermeidung einer Kollision eines lenkbaren Rades (5) mit anderen Maschinenteilen sowie
- eine Bedieneinrichtung, die mit dem Steuersystem (7) verbunden ist,
**gekennzeichnet durch** die folgenden Verfahrensschritte:
a) Es wird ein maximal erlaubter Lenkwinkel (8) in Abhängigkeit eines an der Bedieneinrichtung gewählten Arbeitsmodus, insbesondere eines Ackerbetriebs und/oder Frontladerbetriebs und/oder Geländefahrbetriebs, vorgegeben.
b) In Abhängigkeit von dem vorgegebenen Lenkwinkel (8) wird von dem Steuersystem (7) eine Bewegung der Pendelachse (4) begrenzt.

## Claims

1. An agricultural working machine (1), in particular a tractor, comprising
- a vehicle frame (2),
- at least two wheel axles (3),
- at least three wheels (5, 6),
- a control system (7), as well as
- an operating device which is connected to the control system (7),
wherein the wheel axles (3, 4) are at least indirectly connected to the vehicle frame (2) in a force-transmitting manner, wherein at least one wheel axle (3) is formed by a floating axle (4) which is pivotably mounted about a pivot axis (10) relative to the vehicle frame (2),
wherein, on the floating axle (3), at least one wheel (5) is formed by a steerable wheel (5) which is pivotable about a steering axis (19) relative to the floating axle (4) in a manner such that a steering angle (8) of the steerable wheel (5) with respect to a longitudinal direction (18) of the working machine (1) can be modified,
wherein the steering behaviour of the working machine (1) can be controlled by means of the control system (7) avoiding a collision of the steerable wheel (5) with other parts of the machine,
**characterized in that**
a pivot angle (22), through which the floating axle (4) can be pivoted about the pivot axis (10) relative to the vehicle frame (2), is limited by means of the control system (7) as a function of a specified maximum steering angle (8) of the at least one steerable wheel (5), and
the maximum possible steering angle (8) is specified as a function of a working mode selected on the operating device, in particular a cultivation operation and/or front loader operation and/or ground travel operation.

2. The working machine according to claim 1, **characterized in that** the pivoting of the floating axle (4) can be limited by means of at least one positioning device (14), preferably by means of a combined limitation of the travels of two axle portions (15) each with a floating axis (4), wherein the axle portions (15) are preferably disposed on opposite sides of the pivot axis (10).

3. The working machine according to claim 2, **characterized in that** the positioning device (14) comprises an adjustable mechanical stop and/or a hydraulic and/or pneumatic cylinder.

4. The working machine according to one of claims 1 to 3, **characterized in that** the pivot axis (10) runs at least substantially horizontally as well as in the longitudinal direction (18) of the working machine (1).

5. The working machine according to one of claims 1 to 4, **characterized in that** the floating axle (4) comprises a floating axle structure (9), wherein preferably, the floating axle structure (9) is pivotably mounted about the pivot axis (10) relative to the vehicle frame (2), or is mounted on an axle support which is pivotable relative to the vehicle frame (2).

6. The working machine according to claim 5, **characterized in that** the floating axle structure (9) is T-shaped in configuration, wherein preferably, the floating axle structure (9) is mounted on the vehicle frame (2) at a bearing end (12).

7. The working machine according to claim 5 or claim 6, **characterized by** mutually opposing wheel arms (13) disposed on the floating axle structure (9), their respective free ends being provided with a steerable wheel (5).

8. The working machine according to claim 7, **characterized in that** the wheel arms (13) of the floating axle structure (9) are respectively suspended on the vehicle frame (2) by means of at least one positioning device (14).

9. The working machine according to one of claims 1 to 8, **characterized in that** a position of the at least one floating axle (4) which is pivotable relative to the vehicle frame (2) can be determined relative to the vehicle frame (2) by means of at least one angle sensor (17), with which a pivot position of an axle portion (15) of the floating axle (4) which is pivotable relative to the vehicle frame, in particular of a wheel arm (13) of a floating axle structure (9) and/or by means of a position sensor (16), by means of which a distance between an axle portion of the floating axle (4), in particular of a wheel arm (13) of a floating axle structure (9), and the vehicle frame (2) can be determined, or a travel of a positioning device (14) disposed between an axle portion (15) of the floating axle (4) and the vehicle frame (2) can be determined.

10. A method for steering an agricultural working machine (1), in particular a tractor, the working machine (1) comprising
- a vehicle frame (2),
- at least two wheel axles (3) which are coupled to the vehicle frame (2) in a force-transmitting manner, wherein at least one wheel axle (3) is formed by a floating axle (4) which is pivotably mounted about a pivot axis (10) relative to the vehicle frame (2),
- at least three wheels (5, 6), wherein at least one wheel (5) is steerably mounted on the floating axle (4), so that a steering angle (8) of the steerable wheel (5) with respect to a longitudinal direction (18) of the working machine (1) can be modified,
- a control system (7) for improving the steering behaviour of the working machine (1), avoiding a collision of a steerable wheel (5) with other parts of the machine, as well as
- an operating device which is connected to the control system (7),
**characterized by** the following steps of the method:
a) a maximum permitted steering angle (8) is specified as a function of a working mode selected on the operating device, in particular a cultivation operation and/or front loader operation and/or ground travel operation,
b) a movement of the floating axle (4) is limited by the control system (7) as a function of the specified steering angle (8).

## Revendications

1. Machine de travail agricole (1), en particulier un tracteur, incluant
- un bâti de véhicule (2),
- au moins deux essieux (3),
- au moins trois roues (5, 6),
- un système de commande (7) ainsi que
- un équipement d'actionnement qui est relié au système de commande (7),
les essieux (3, 4) étant reliés au moins indirectement au bâti de véhicule (2) de manière à transmettre une force,
au moins un essieu (3) étant formé par un essieu pendulaire (4) qui est monté pivotant autour d'un axe de pivotement (10) par rapport au bâti de véhicule (2),
sur l'essieu pendulaire (3), au moins une roue (5) étant formée par une roue directrice (5) qui est pivotante autour d'un axe directionnel (19) par rapport à l'essieu pendulaire (4) de façon qu'un angle de braquage (8) de la roue directrice (5) par rapport à une direction longitudinale (18) de la machine de travail (1) soit modifiable, au moyen du système de commande (7), le comportement de braquage de la machine de travail (1) étant commandable en évitant une collision de la roue directrice (5) avec d'autres parties de machine,
**caractérisée en ce que**
au moyen du système de commande (7), en fonction d'un angle de braquage maximal prescrit (8) de la au moins une roue directrice (5), un angle de pivotement (22) selon lequel l'essieu pendulaire (4) est pivotant par rapport au bâti de véhicule (2) autour de l'axe de pivotement est limité, et l'angle de braquage maximal possible (8) est prescrit en fonction d'un mode de travail sélectionné au niveau de l'équipement d'actionnement, en particulier en fonction d'un fonctionnement avec travail de la terre et/ou d'un fonctionnement avec chargeur frontal et/ou d'un fonctionnement de conduite sur le terrain.

2. Machine de travail selon la revendication 1, **caractérisée en ce que** le pivotement de l'essieu pendulaire (4) est limitable au moyen d'au moins un équipement de réglage (14), préférentiellement au moyen d'une limitation combinée des courses de deux parties d'essieu (15) avec respectivement un essieu pendulaire (4), les parties d'essieu (15) étant disposées préférentiellement sur des côtés opposés de l'axe de pivotement (10).

3. Machine de travail selon la revendication 2, **caractérisée en ce que** l'équipement de réglage (14) inclut une butée mécanique réglable et/ou un vérin hydraulique et/ou pneumatique.

4. Machine de travail selon une des revendications 1 à 3, **caractérisée en ce que** l'axe de pivotement (10) s'étend au moins sensiblement horizontalement ainsi que dans la direction longitudinale (18) de la machine de travail (1).

5. Machine de travail selon une des revendications 1 à 4, **caractérisée en ce que** l'essieu pendulaire (4) comporte un corps d'essieu pendulaire (9), préférentiellement le corps d'essieu pendulaire (9) étant monté pivotant autour de l'axe de pivotement (10) par rapport à un bâti de véhicule (2) ou sur un support d'essieu pivotant par rapport au bâti de véhicule (2).

6. Machine de travail selon la revendication 5, **caractérisée en ce que** le corps d'essieu pendulaire (9) est conformé en T, préférentiellement le corps d'essieu pendulaire (9) étant monté sur une extrémité de support (12) sur le bâti de véhicule (2).

7. Machine de travail selon la revendication 5 ou 6, **caractérisée par** des bras de roues (13) qui sont disposés à l'opposé l'un de l'autre sur le corps d'essieu pendulaire (9) et dont les extrémités libres sont munies respectivement d'une roue directrice (5).

8. Machine de travail selon la revendication 7, **caractérisée en ce que** les bras de roues (13) du corps d'essieu pendulaire (9) sont suspendus sur le bâti de véhicule (2) respectivement au moyen d'au moins un équipement de réglage (14).

9. Machine de travail selon une des revendications 1 à 8, **caractérisée en ce qu'**une position du au moins un essieu pendulaire (4), pivotant par rapport au bâti de véhicule (2), par rapport au bâti de véhicule (2) est déterminable au moyen d'au moins un capteur d'angle (17), avec lequel une position de pivotement d'une partie d'essieu (15) avec l'essieu pendulaire (4), pivotante par rapport au bâti de véhicule (2), en particulier d'un bras de roue (13) d'un corps d'essieu pendulaire (9), et/ou au moyen d'un capteur de course (16) au moyen duquel une distance entre une partie d'essieu de l'essieu pendulaire (4), en particulier d'un bras de roue (13) d'un corps d'essieu pendulaire (9), et le bâti de véhicule (2), ou une course de réglage d'un équipement de réglage (14) disposé entre une partie d'essieu (15) avec l'essieu pendulaire (4) et le bâti de véhicule (2) est déterminable.

10. Procédé de braquage d'une machine de travail agricole (1), en particulier d'un tracteur, la machine de travail (1) incluant
- un bâti de véhicule (2),
- au moins deux essieux (3) qui sont couplés au bâti de véhicule (2) de manière à transmettre une force, au moins un essieu (3) étant formé par un essieu pendulaire (4) qui est monté pivotant autour d'un axe de pivotement (10) par rapport au bâti de véhicule (2),
- au moins trois roues (5, 6), sur l'essieu pendulaire (4) étant montée de manière directionnelle au moins une roue (5), de façon qu'un angle de braquage (8) de la roue directrice (5) par rapport à une direction longitudinale (18) de la machine de travail (1) soit modifiable,
- un système de commande (7) pour améliorer le comportement de braquage de la machine de travail (1) en évitant une collision d'une roue directrice (5) avec d'autres parties de machine ainsi que
- un équipement d'actionnement qui est relié au système de commande (7)
**caractérisé par** les étapes de procédé suivantes :
a) un angle de braquage maximal admis (8) est prescrit en fonction d'un mode de travail sélectionné au niveau de l'équipement d'actionnement, en particulier fonctionnement avec travail de la terre et/ou fonctionnement avec chargeur frontal et/ou fonctionnement de conduite sur le terrain.
b) En fonction de l'angle de braquage prescrit (8), un déplacement de l'essieu pendulaire (4) est limité par le système de commande (7) .
